# EUROPÄISCHE PATENTANMELDUNG

(11) **EP 1 182 527 A2**
(43) Veröffentlichungstag der Anmeldung: **27.02.2002**
(21) Anmeldenummer: 01116152.8
(22) Anmeldetag: 04.07.2001
(51) Int. Cl.: G05B 19/4097, G05B 19/409

(54) **Verfahren zur automatischen Konfiguration von Komponentenanordnungen und zur automatischen Generierung von Herstellungsunterlagen**

(30) Priorität: 22.08.2000 DE 10041031
(71) Anmelder: Airbus Deutschland GmbH, 21129 Hamburg (DE)
(72) Erfinder: Lohmann, Hans-Jürgen, 21149 Hamburg (DE); Mühlmeister, Werner, 25436 Moorenge (DE); Rasch, Carsten, 21244 Buchholz (DE)
(74) Vertreter: Hansmann, Dierk, Dipl.-Ing.

(57) **Zusammenfassung**

Verfahren zur automatischen Konfiguration von Komponentenanordnungen, d.h. zur Definition der räumlichen Anordnung von Bauteilen zueinander und zu deren Optimierung bzgl. funktionaler Position und/oder Menge vorzugsweise in einem Flugzeug.

Um die Anordnung der Komponenten automatisch zu konfigurieren und um gegebenenfalls Herstellungsunterlagen über ein Datenverarbeitungsprogramm automatisch zu erzeugen, ist vorgesehen,
- daß in ein Konfigurationstool eines Datenverarbeitungssystems der den Bauunterlagen zugrunde liegende Flugzeugtyp eingegeben wird,
- daß die flugzeugspezifische Geometrie in einem Zeichnungsmodul des Datenverarbeitungssystems gespeichert, aus diesem automatisch geladen und dargestellt wird,
- daß in einer Funktions- und Datenanalyse die erforderlichen geometrischen Objekte bzw. Komponenten ermittelt, mathematisch beschrieben, Positionsregeln mathematisch abgebildet und gespeichert werden sowie der flugzeugspezifischen Geometrie im Zeichnungsmodul des Datenverarbeitungssystems hinzugefügt werden, und
- daß in dem Konfigurationstool des Datenverarbeitungssystems die Objekte bzw. Komponeneten zusammen mit der flugzeugspezifischen Geometrie nach einem definierten, Kundenanforderungen berücksichtigenden Regelwerk automatisch räumlich zueinander optimal konfiguriert werden.

Weiterhin können in einem Generierungstool des Datenverarbeitungssystems Herstellungsunterlagen nach Eingabe von projektbezogenen Daten mittels eines Rechenprogramms automatisch generiert und als konventionelle Unterlagen ausgegeben werden.

## Beschreibung

Die Erfindung betrifft ein automatisches Verfahren zur Konfiguration von Komponentenanordnungen, d.h. zur Definition der räumlichen Anordnung von Bauteilen zueinander und zu deren Optimierung bzgl. funktionaler Position und/oder Menge vorzugsweise in einem Flugzeug.

Die Erfindung bezieht sich auch auf ein automatisches Verfahren zur Generierung von Herstellungsunterlagen, insbesondere von Bauunterlagen wie Zeichnungen und/oder Stücklisten, die zur Integration vorzugsweise in einem Flugzeug und zur Dokumentation dienen.

Für jeden Flugzeugkunden sind spezifische Herstellungsunterlagen zu erstellen, die zur Definition der Anordnungen von Komponenten, deren Integration in ein Flugzeug sowie zur Dokumentation dienen. Beispielsweise handelt es sich bei der Erstellung derartiger Unterlagen im Bereich eines Passagier-Versorgungskanales und den dort eingebauten Service/Informationseinheiten um Dokumente für die Videovoruntersuchung (Type, Anzahl und Einbaupositionen von Videokomponenten). den Plotterplan (Anschlußübersicht der Versorgungskanalkomponenten) und um die Passagier-Versorgungseinheit betreffende Montagezeichnungen und Stücklisten. Für die Erstellung der Unterlagen ist das Kabinenlayout Grundlage für eine Auslegung der Gepäckablagen und des Versorgungskanals. Hierbei ist der Versorgungskanal als Bestandteil der Flugzeugkabine unterhalb der rechten und linken Gepäckablagen angeordnet. Über die Einbauten im Versorgungskanal, der durch eine Aneinanderreihung verschiedener Passagier-Versorgungseinheiten, Sauerstoffboxen, auf Kundenwunsch Videomonitore und Blenden gebildet wird, werden die Passagiere mit Instruktionen, Beleuchtung, Luft und im Notfall mit Sauerstoff versorgt.

Es ist bekannt, bereits vorhandene Lösungen bzw. Prinzipien sowie Komponenten in ihrer kundenbezogenen Anordnung manuell neu konstruktiv zu beschreiben, zum Beispiel unter Verwendung von technisch-administrativen Systemen zur Stücklistenerstellung und CAD zur Zeichnungserstellung. Hierbei wird die räumliche Anordnung der Komponenten festgelegt, und zwar mit dem Wissen und der Erfahrung des Konstrukteurs um die flugzeugtyp- und fertigungsbezogenen Integrationsmerkmale wie z. B. Größe, Türen und Anforderungen aus dem Fertigungsbereich, mögliche Systeme und Anschlüsse, die kundenspezifischen Kabinenlayoutanforderungen, beispielsweise Klasseneinteilung, Sitztypen, Galley- und Toilettenpositionen und Sondereinbauten, Behördenanforderungen, Designforderungen, Ergonomie- und Komfortforderungen, z. B. Reichweite des sitzenden Passagiers oder Zuglufterscheinungen, sowie kommerzielle Erfordernisse. Die Zeichnungen werden mittels CAD-System manuell erstellt, die Anzahl der Komponenten ausgezählt und in Stücklisten manuell dokumentiert.

Der Erfindung liegt die Aufgabe zugrunde, ein Verfahren der eingangs genannten Art zu schaffen, mit dem die Anordnung der Komponenten automatisch konfiguriert und mit dem gegebenenfalls Herstellungsunterlagen wie Zeichnungen, Stücklisten sowie ergänzende Auswertungen wie beispielsweise Gerätelisten oder eine Massenverteilung über ein Datenverarbeitungsprogramm automatisch erzeugt werden.

Die Aufgabe wird erfindungsgemäß dadurch gelöst:
- daß in ein Konfigurationstool eines Datenverarbeitungssystems der den Bauunterlagen zugrunde liegende Flugzeugtyp eingegeben wird,
- daß die flugzeugspezifische Geometrie in einem Zeichnungsmodul des Datenverarbeitungssystems gespeichert, aus diesem automatisch geladen und dargestellt wird,
- daß in einer Funktions- und Datenanalyse die erforderlichen geometrischen Objekte bzw. Komponenten ermittelt, mathematisch beschrieben, Positionsregeln mathematisch abgebildet und gespeichert werden sowie der flugzeugspezifischen Geometrie im Zeichnungsmodul des Datenverarbeitungssystems hinzugefügt werden, und
- daß in dem Konfigurationstool des Datenverarbeitungssystems die Objekte bzw. Komponeneten zusammen mit der flugzeugspezifischen Geometrie nach einem definierten, Kundenanforderungen berücksichtigenden Regelwerk automatisch räumlich zueinander optimal konfiguriert werden.

Eine Weiterbildung der Erfindung besteht darin, daß in einem Generierungstool des Datenverarbeitungssystems Herstellungsunterlagen nach Eingabe von projektbezogenen Daten mittels eines Rechenprogramms generiert und als konventionelle Unterlagen ausgegeben werden.

Eine Ausgestaltung des erfindungsgemäßen Verfahrens, wobei die Herstellungsunterlagen für den Bereich eines Passagier-Versorgungskanals vorzugsweise aus Dokumenten für Videovoruntersuchungen, Plotterplänen, Montagebauunterlagen wie Zeichnungen, Stücklisten oderdergleichen bestehen, ist dadurch gekennzeichnet, daß das für einen Kunden spezifische Kabinenlayout mit seinen Komponenten Galleys, Toiletten, Stauschränken, Sitzen usw. als Grundlage für eine automatische Auslegung der Einbauten und des Versorgungskanals durch Angabe einer Position in der Kabine (Orientierungsangabe) in das Projektkabinenlayout eingegeben und der flugzeugspezifischen Geometrie hinzugefügt wird, daß das Kabinenlayout beeinflußende Umgebungseinbauten für den Versorgungskanal parametrisch beschrieben sowie dem Gesamtprojekt hinzugefügt werden, und daß der Versorgungskanal für eine vorgegebene Konfiguration der Umgebungseinbauten und ein vorgegebenes Kabinenlayout nach einem definierten, Kundenanforderungen berücksichtigenden Regelwerk automatisch konfiguriert wird.

Für die automatische Auslegung der Gepäckablagen und des Versorgungskanals ist das Kabinenlayout die Grundlage, wobei zur Definition des Kabinenlayouts erfindungsgemäß eine sogenannte Kabinenkomponenten-Referenzdatenbank mit parametrisch vordefinierten Komponenten zur Verfügung steht. Die Parametrie erlaubt vorteilhafterweise die Definition beliebig neuer Komponenten. Aus dieser Datenbank werden über eine Benutzeroberfläche Komponenten ausgewählt sowie durch Angabe ihrer Position und gegebenenfalls einer Orientierung in das Kabinenlayout eingefügt. Neben der automatischen Konfiguration des Versorgungskanals für eine gegebene Gepäckablagenkonfiguration und ein gegebenes Kabinenlayout können Teilbereiche, in denen Sonderkonfigurationen erforderlich sind und die nicht automatisch erzeugt werden können, vorteilhafterweise manuell konfiguriert werden.

Weitere Ausgestaltungen der Erfindung sind in den Unteransprüchen 4 bis 13 beschrieben.

Ein wesentlicher Vorteil des erfindungsgemäßen Verfahrens ist darin zusehen, daß das für die eingangs genannten und vergleichbare Konstruktionsaufgaben erforderliche und sich ständig wiederholende Spezialwissen in einem automatisierten Verfahren zur Generierung von Herstellunterlagen erhoben, dokumentiert und damit konserviert wird, wobei der Konstrukteur von Routinetätigkeiten entlastet wird. Weitere erfindungsgemäße Vorteile sind in einer erheblichen Verringerung der Durchlaufzeiten, einer Reduzierung des Konstruktionsaufwands, einem Zuwachs an substantieller Produktivität und einer Qualitätssteigerung zu sehen. Vorteilhaft ist auch, daß Variantenuntersuchungen zur Optimierung von Ergebnissen mit den Aspekten Sicherheit, Kundennutzen, Kosten und Ergonomie auf einfache Weise ermöglicht werden, und daß eine automatische Überprüfung und Visualisierung von Regel- und Restriktionsverletzungen durchgeführt werden kann.

In der Zeichnung ist ein Ausführungsbeispiel zur Erläuterung des erfinderischen Verfahrens dargestellt, und zwar zeigt:
- Fig. 1: einen Ablaufplan zur automatischen Konfiguration von Komponentenanordnungen und zur automatischen Erstellung von Herstellungsunterlagen für den Bereich eines Passagier-Versorgungskanals in einer Flugzeugkabine,
- Fig. 2: den Aufbau eines Gesamtsystems mit seinen Elementen und Datenbanken sowie den generierten Unterlagen.

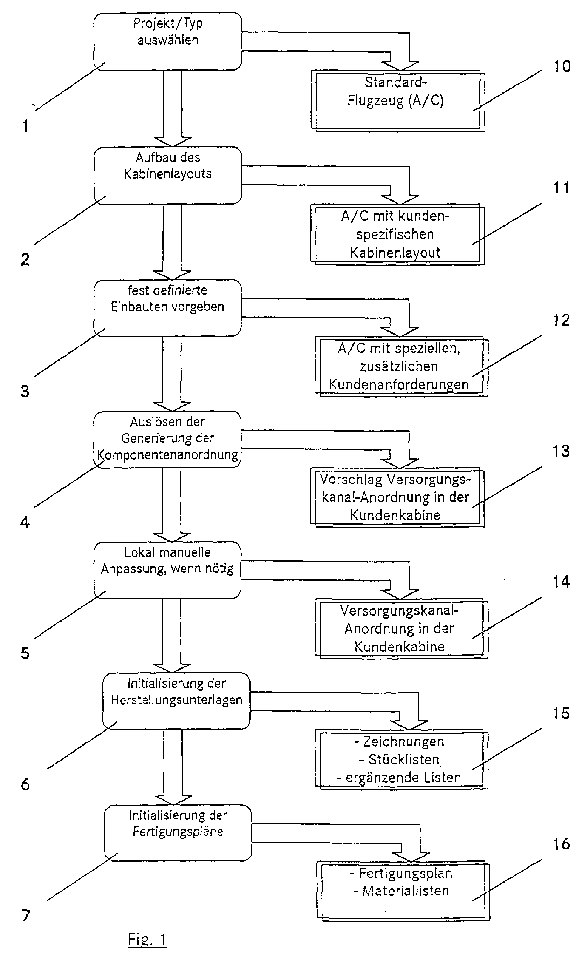

Der aus Fig. 1 ersichtliche Ablaufplan weist eine linke Spalte von Blöcken 1 bis 7 auf, die jeweils einen Verfahrensschritt des erfindungsgemäßen Verfahrens für ein Einzelsystem darstellen. Beim Start des Systems muß das behandelte Flugzeug bzw. der den Bau- bzw. Herstellungsunterlagen zugrundeliegende Flugzeugtyp eingegeben werden. Dieses ist dargestellt im obersten Block 1, welcher den ersten Verfahrensschritt zur Auswahl des Projektes angibt, beispielsweise bei der Konfiguration eines Passagier-Versorgungskanales gemäß Kundenwunsch. Das an dieser Stelle erzielte Zwischenergebnis ist in einem weiteren Block 10 dargestellt, der Bestand einer zweiten, rechten Spalte von Ergebnisblöcken 10 bis 16 ist.

Der zweite Verfahrensschritt betrifft die Definition von einzelnen Baugruppen wie z. B. Küchen, Toiletten oder Speichern. Hierzu wird über Block 2 der Aufbau des Kabinenlayouts dargestellt, wobei im Ergebnisblock 11 ein Flugzeug mit kundenspezifischem Kabinenlayout abgelegt wird. Laut Block 3 betrifft der dritte Verfahrensschritt die Anordnung von die Konfiguration beeinflussenden fest definierten Komponenten wie z. B. bewegbare Klassenteiler und/oder LCD-Schirme. Ergebnis gemäß Block 12 ist ein Flugzeug mit besonderen Kundenwünschen innerhalb des kundenspezifischen Kabinenlayouts. Alternativ zum Aufbau eines neuen Kabinenlayouts kann auch ein vorhandenes Layout geladen werden bzw. über eine Schnittstelle ein extern erstelltes Layout eingelesen werden. Der im Block 4 dargestellte vierte Verfahrensschritt erzeugt die Anordnung der Komponenten, wie zum Beispiel von Passagier-Versorgungseinheiten im Versorgungskanal. Ergebnis ist deren Anordnung innerhalb der kundenspezifischen Kabine, wie aus Block 13 ersichtlich ist. Eine manuelle lokale Anpassung kann im Schritt 5 durchgeführt werden, wobei als Ergebnis dieses fünften Verfahrensschrittes eine akzeptierte neue Anordnung von Passagier-Versorgungseinheiten im Versorgungskanal der kundenspezifischen Kabine im Block 14 abgelegt wird. Verfahrensschritt 6 betrifft die Erzeugung/Generierung von Zeichnungen, Stücklisten und/oder Ergänzungslisten in Block 6 mit zugehörigem Ergebnisblock 15. Der abschließende im Block 7 durchgeführte Verfahrensschritt betrifft die Erzeugung/Generierung des Fertigungsplanes mit den Fertigungsaufträgen im Ergebnisblock 16.

In einer weiteren Ausgestaltung der Erfindung können Unterlagen für andere Systeme wie z. B. eine Fluchtwegbeleuchtung, Teppichverlegung mit Einzelteilzeichnungen, elektrische Verkabelungen oder auch Rohrleitungsanordnungen im gleichen Ablauf generiert werden. Die einzelnen Systeme sind in Module unterschieden.

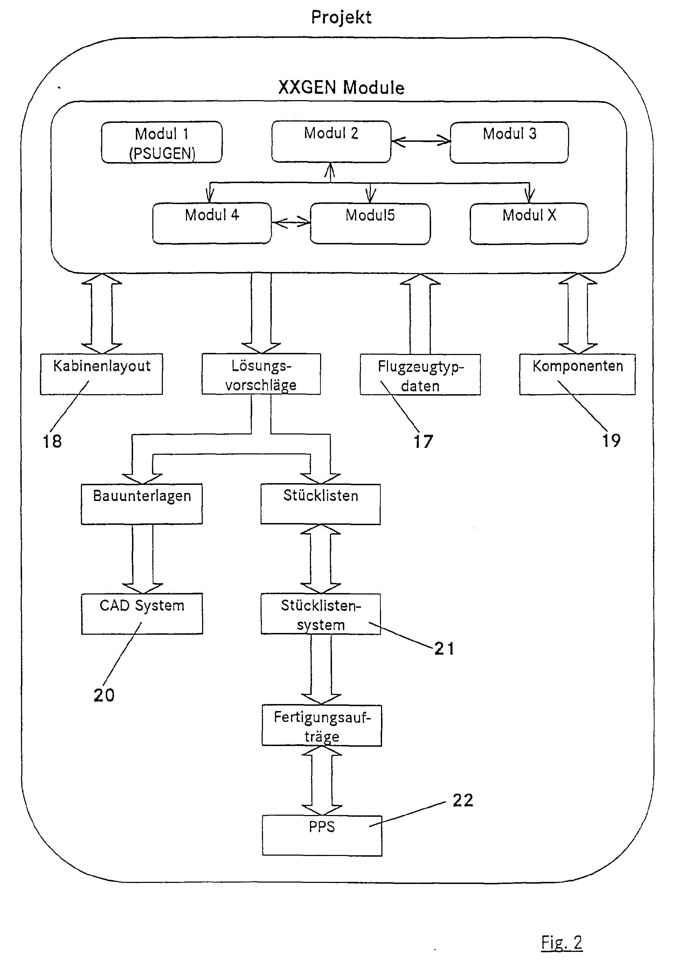

Wie aus Fig. 2 schematisch zu ersehen ist, haben alle Module 1 bis X Zugriff auf die konstanten Parameter für den eingegebenen Flugzeugtyp, die in dem Speicher einer Datenbank 17 abgelegt sind. Diese Daten sind unabhängig vom Kunden immer die gleichen. Weiterhin greifen die einzelnen Module 1 bis X auf eine gemeinsame, kundenspezifische Datenbank 18 zu, in der das Kabinenlayout gespeichert ist, d.h. in der somit alle Parameter abgelegt sind, die die relevanten Kabineneinbauten für ein vorgegebenes Projekt, das alle Module gleichermaßen bearbeiten, beschreiben. Jedes Modul gibt Parameter in die Datenbank 18 ein oder fragt diejenigen Parameter, die es benötigt, aus der Datenbank 18 ab. Desweiteren werden einzelne Komponenten zur Generierung von Bauunterlagen und Stücklisten in einer Komponenten-Referenzdatenbank 19 abgelegt. Als Ergebnis eines durchgeführten Bearbeitungsverfahrens generiert jedes Modul automatisch einen Lösungsvorschlag, der dem Benutzer angezeigt wird. Der Benutzer hat die Möglichkeit, diesen Lösungsvorschlag manuell zu modifizieren. Die Ankopplung an ein CAD-System 20 erfolgt über ein zeichnerisch nicht dargestelltes Plotscript, d.h. der Lösungsvorschlag wird an ein parallel laufendes CAD-System 20 transferiert, dort angezeigt und als konventionelle Zeichnung ausgegeben. Auch die Stücklisten und Fertigungsaufträge werden über eine definierte Schnittstelle automatisch in den zur Verfügung stehenden Stücklisten- bzw. Produktionsplansystemen 21 bzw. 22 ausgegeben.

Mit dem erfindungsgemäßen Verfahren wird eine automatische Konfiguration von Komponentenanordnungen durchgeführt, d.h. eine automatische Definition der räumlichen Anordnung von Bauteilen zueinander und deren Optimierung bezüglich ihrer funktionalen Position (z.B. Einsehbarkeit, Erreichbarkeit, Berücksichtigung von Vorschriften, Gesetzen odgl.) und/oder Menge. Es handelt sich um ein automatisches Verfahren bei dem das sich ständig wiederholende Spezialwissen der Konstrukteure in Regeln formuliert, dokumentiert und zur automatischen Anwendung bei ähnlichen Problemfällen abrufbar ist.

## Patentansprüche

1. Verfahren zur automatischen Konfiguration von Komponentenanordnungen, d.h zur Definition der räumlichen Anordnung von Bauteilen zueinander und zu deren Optimierung bzgl. funktionaler Position und/oder Menge vorzugsweise in einem Flugzeug, dadurch gezeichnet,
- daß in ein Konfigurationstool eines Datenverarbeitungssystems der den Bauunterlagen zugrunde liegende Flugzeugtyp eingegeben wird,
- daß die flugzeugspezifische Geometrie in einem Zeichnungsmodul des Datenverarbeitungssystems gespeichert, aus diesem automatisch geladen und dargestellt wird,
- daß in einer Funktions- und Datenanalyse die erforderlichen geometrischen Objekte bzw. Komponenten ermittelt, mathematisch beschrieben, Positionsregeln mathematisch abgebildet und gespeichert werden sowie der flugzeugspezifischen Geometrie im Zeichnungsmodul des Datenverarbeitungssystems hinzugefügt werden, und
- daß in dem Konfigurationstool des Datenverarbeitungssystems die Objekte bzw. Komponeneten zusammen mit der flugzeugspezifischen Geometrie nach einem definierten, Kundenanforderungen berücksichtigenden Regelwerk automatisch räumlich zueinander optimal konfiguriert werden.

2. Verfahren nach Anspruch 1 zur automatischen Generierung von Herstellungsunterlagen, insbesondere von Bauunterlagen wie Zeichnungen und/oder Stücklisten, die zur Integration vorzugsweise in einem Flugzeug und zur Dokumentation dienen, **dadurch gekennzeichnet, daß** in einem Generierungstool des Datenverarbeitungssystems Herstellungsunterlagen nach Eingabe von projektbezogenen Daten mittels eines Rechenprogramms generiert und als konventionelle Unterlagen ausgegeben werden.

3. Verfahren nach Anspruch 1 oder 2, wobei die Herstellungsunterlagen für den Bereich eines Passagier-Versorgungskanals vorzugsweise aus Dokumenten für Videovoruntersuchungen, Plotterplänen, Montagebauunterlagen wie Zeichnungen, Stücklisten oderdergleichen bestehen, **dadurch gekennzeichnet, daß** das für einen Kunden spezifische Kabinenlayout mit seinen Komponenten Galleys, Toiletten, Stauschränken, Sitzen usw. als Grundlage für eine automatische Auslegung der Einbauten und des Versorgungskanals durch Angabe einer Position in der Kabine (Orientierungsangabe) in das Projektkabinenlayout eingegeben und der flugzeugspezifischen Geometrie hinzugefügt wird, daß das Kabinenlayout beeinflußende Umgebungseinbauten für den Versorgungskanal parametrisch beschrieben sowie dem Gesamtprojekt hinzugefügt werden, und daß der Versorgungskanal für eine vorgegebene Konfiguration der Umgebungseinbauten und ein vorgegebenes Kabinenlayout nach einem definierten, Kundenanforderungen berücksichtigenden Regelwerk automatisch konfiguriert wird.

4. Verfahren nach Anspruch 1, 2 oder 3, **dadurch gekennzeichnet, daß** Anordnungen und Unterlagen bzw. Dokumente für beliebig andere Kabinensysteme in gleicher Weise generiert werden.

5. Verfahren nach Anspruch 1, 2, 3 oder 4, **dadurch gekennzeichnet, daß** parametrisch vordefinierte Objekte bzw. Komponenten von einer Komponenten-Referenzdatenbank zur Verfügung gestellt und der flugzeugspezifischen Geometrie hinzugefügt werden.

6. Verfahren nach Anspruch 1, 2, 3, 4 oder 5, gekennzeichnet die Verwendung einer Kabinenkomponenten-Referenzdatenbank durch für die Komponenten eines Kabinenlayouts.

7. Verfahren nach Anspruch 1, 2, 3, 4, 5 oder 6, **dadurch gekennzeichnet, daß** in den Referenzdatenbanken über die Parametrie beliebig viele unterschiedliche Objekte bzw. Komponenten bereitgestellt werden.

8. Verfahren nach einem der Ansprüche 1, 2, 3, 4, 5, 6 oder 7, **dadurch gekennzeichnet, daß** vor dem Projektstart vorliegende, in der Definitionsphase des Flugzeuges mit einem Kunden abgestimmte und erstellte Kabinen-Layout-Zeichnungen über eine in dem Datenverarbeitungssystem vorgesehene Schnittstelle in das Projekt geladen werden.

9. Verfahren nach Anspruch 3, **dadurch gekennzeichnet, daß** als das Kabinenlayout beeinflußende Umgebungseinbauten vorgesehene Gepäckablagen als Geräteträger und Träger von elektrischen Schnittstellen für den Versorgungskanal parametrisch beschrieben und dem Projekt hinzugefügt werden.

10. Verfahren nach Anspruch 9, **dadurch gekennzeichnet, daß** beim Start des Projektes eine Kette von aufeinanderfolgenden Gepäckablagen als Teil der flugzeugspezifischen Geometrie geladen wird, und daß die Gepäckablagenkette mittels eines im Datenverarbeitungssystem abgelegten Regelwerkes an die vorgegebenen Kabinenkomponenten automatisch angepaßt wird.

11. Verfahren nach Anspruch 2, **dadurch gekennzeichnet, daß** die automatisch erzeugten Zeichnungen über ein Plotscript an unterschiedliche CAD-Ausgabesysteme übermittelt werden.

12. Verfahren nach Anspruch 2 oder 11, **dadurch gekennzeichnet, daß** Zeichnungen, Stücklisten und/oder Fertigungspläne über eine definierte Schnittstelle an ein technisch administratives System gegeben werden.

13. Verfahren nach einem der Ansprüche 1 bis 12, **gekennzeichnet durch** die Anwendung der Verfahrensschritte für eine konstruktive Auslegung von anderen Verkehsmitteln oder im Anlagenbau.
